(19) Europäisches Patentamt
European Patent Office
Office européen des brevets

(11) Numéro de publication: **0 208 580**
**B1**

(12) **FASCICULE DE BREVET EUROPÉEN**

(45) Date de publication du fascicule du brevet: **17.01.90**

(51) Int. Cl.⁴: **C 01 F 17/00**

(21) Numéro de dépôt: **86401272.9**

(22) Date de dépôt: **11.06.86**

(54) **Nouveau composé de cérium IV et son procédé de préparation.**

(30) Priorité: **20.06.85 FR 8509374**

(43) Date de publication de la demande:
**14.01.87 Bulletin 87/03**

(45) Mention de la délivrance du brevet:
**17.01.90 Bulletin 90/03**

(84) Etats contractants désignés:
**AT BE CH DE FR GB IT LI LU NL SE**

(56) Documents cité:
**FR-A-2 080 975**
**FR-A-2 416 867**
**GB-A-2 075 478**
**GB-A-2 102 780**
**GB-A-2 167 739**

**INORGANIC CHEMISTRY, vol. 7, no. 4, avril 1968, pages 715-721; T.A. BEINEKE et al.: "The crystal structure of ceric ammonium nitrate"**

**Le dossier contient des informations techniques présentées postérieurement au dépôt de la demande et ne figurant pas dans le présent fascicule.**

(73) Titulaire: **RHONE-POULENC CHIMIE**
**25, quai Paul Doumer**
**F-92408 Courbevoie Cédex (FR)**

(72) Inventeur: **Chane-Ching, Jean-Yves**
**19, raritam avenue**
**Highland Park, N.J. 08904 (US)**

(74) Mandataire: **Dutruc-Rosset, Marie-Claude**
**RHONE-POULENC INTERSERVICES Service Brevets Chimie 25, Quai Paul Doumer**
**F-92408 Courbevoie Cédex (FR)**

**EP 0 208 580 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe dipposition (Art. 99(1) Convention sur le brevet européen).

LIBERGRAF, STOCKHOLM 1990

**Description**

La présente invention concerne un nouveau composé de cérium IV et l'un de ses procédés d'obtention.

Plus précisément, l'invention a pour but de fournir un composé de cérium IV susceptible d'être aisément dispersable dans l'eau.

Il est connu selon l'Encyclopédie KIRK-OTHMER – Encyclopedia of Chemical Technology (deuxième édition) volume 4, p. 850 que l'on peut préparer un dioxyde cérique hydraté répondant à la formule $CeO_2$, x $H_2O$ dans laquelle x est un nombre compris entre 0,5 et 2 et se présentant sous la forme d'un précipité gélatineux par addition d'hydroxyde de sodium ou d'ammonium aux solutions de sels cériques.

On a proposé selon le brevet français 2 482 075 de préparer un composé de cérium IV dispersable dans l'eau selon un procédé qui consiste à disperser en milieu aqueux, un hydrate d'oxyde de cérium IV sensiblement sec ayant subi un traitement thermique entre 200°C et 450°C en présence d'un agent de désagrégation, notamment l'acide nitrique. Ainsi le chauffage en présence d'un agent de désagrégation réalise la désintégration des cristallites agrégés dans l'hydrate d'oxyde de cérium IV et produit ainsi un composé de cérium dispersable.

Il est mentionné dans ce brevet que la préparation de l'hydrate d'oxyde de cérium (IV) peut se réaliser par précipitation à partir d'un sel de cérium: ainsi par exemple, on peut dissoudre du carbonate céreux de grande pureté dans une solution d'acide nitrique ou chlorhydrique pour obtenir une solution neutre de nitrate ou chlorure céreux que l'on oxyde avec $NH_4OH_2$ / $H_2O_2$ pour obtenir l'hydrate d'oxyde de cérium IV.

Il est également connu selon GB-A-2 102 780 de faire appel à titre diagent de désagrégation, à un sel métallique ou un sel d'ammonium.

La demanderesse a trouvé un composé du cérium IV aisément dispersable et qui est obtenu à partir d'une dispersion aqueuse colloïdale d'un composé de cérium IV préparée directement à partir de la solution aqueuse d'un sel de cérium IV sans passage par l'étape de précipitation et de séparation de l'hydroxyde cérique.

Le composé de cérium IV selon l'invention qui est un sel basique de cérium IV, répond à la formule générale (I) :

$$Ce\,(M)_x\,(OH)_y\,(NO_3)_z \qquad (I)$$

dans laquelle:

- M représente un métal alcalin ou un radical ammonium quaternaire
- x est compris entre 0,01 et 0,2
- y est tel que y = 4 - z + x
- z est compris entre 0,4 et 0,7

L'analyse thermique différentielle révèle lors de la calcination dudit produit sous atmosphère d'air un pic exothermique de 250°C à 300°C pour une montée en température de 300°C par heure.

L'analyse par diffraction X montre que le produit de l'invention est un produit mal cristallisé qui présente une phase cristalline de type $CeO_2$ ayant un paramètre de maille variant de 0,542 nm (5,42 Å) à 0,544 nm (5,44 Å) et un taux de cristallisation variant de 30 à 70 % et de préférence entre 40 et 60 %. Dans la partie cristallisée, la taille des cristallites est faible puisqu'elle est généralement inférieure à 6 nm (60 Å).

La présente invention concerne également le procédé de préparation dudit composé qui est caractérisé par le fait qu'il consiste à préparer une dispersion colloïdale aqueuse de composé de cérium IV et à la soumettre à un traitement thermique.

Dans la première étape du procédé de l'invention, on prépare une dispersion colloïdale d'un composé de cérium IV. Dans celle-ci, le cérium IV se trouve simultanément sous forme d'ions et sous forme de colloïdes ce qui signifie qu'il y a présence de particules de dimensions colloïdales. Pour simplifier l'exposé de l'invention, on entend par "dispersion colloïdale", un mélange ions-colloïdes qui sera mieux caractérisé ultérieurement.

On réalise la préparation de ladite dispersion colloïdale en faisant réagir une solution aqueuse de sel de cérium IV avec une base dans les conditions définies ci-après.

La solution de sel de cérium mise en oeuvre selon le procédé de l'invention est une solution aqueuse de nitrate cérique ou une solution aqueuse de nitrate céri-ammoniacal. Ladite solution peut contenir sans inconvénient du cérium à l'état céreux mais il est souhaitable qu'elle contienne au moins 85 % de cérium IV.

La solution de sel de cérium est choisie de telle sorte qu'elle ne contienne pas d'impuretés qui plissent se retrouver, dans le produit final. Notamment, il est préférable qu'elle soit exempte d'anions covalents à caractère coagulant tel que sulfates, etc. Cependant, on peut en tolérer de faibles quantités. Par exemple, lesdits anions peuvent représenter jusqu'à 5 % en poids du sel de cérium exprimé en $CeO_2$.

La concentration de la solution de sel de cérium n'est pas un facteur critique, selon l'invention. Lorsqu'elle est exprimée en cérium IV, elle peut varier entre 0,1 et 2 moles par litre. Il peut être intéressant pour des questions de productivité d'appareillage, de faire appel à une solution concentrée de sel de cérium IV: une concentration comprise entre 1 et 2 moles par litre est préférée.

La solution aqueuse du sel de cérium IV présente généralement une certaine acidité initiale et peut avoir une normalité variant entre 0,1 N et 4 N. La concentration en ions $H^+$ n'est pas critique. Il est souhaitable qu'elle se situe entre 0,1 N et 1 N.

La solution de nitrate cérique obtenue selon le procédé d'oxydation électrolytique d'une solution de nitrate

céreux et qui est décrite dans la demande de brevet française FR-A-2 570 087 (n° 8 413 641) constitue une matière première de choix.

La solution basique mise en oeuvre selon le procédé de l'invention peut être notamment une solution aqueuse d'ammoniaque, de soude ou de potasse. On peut également faire appel à l'ammoniac gazeux. Selon l'invention, on met en oeuvre de préférence une solution d'ammoniaque.

La normalité de la solution basique mise en oeuvre n'est pas un facteur critique selon l'invention, elle peut varier dans de larges limites, par exemple, entre 0,1 et 11 N mais il est préférable, de faire appel à des solutions dont la concentration varie entre 0,1 et 5 N.

La proportion entre la solution basique et la solution de sel de cérium IV doit être telle que le taux de neutralisation est supérieur ou égal à 0,01 et inférieur ou égal à 3,0.

On définit le taux de neutralisation r par l'équation suivante:

$$r = \frac{n_3 - n_2}{n_1}$$

dans laquelle:

- $n_1$ représente le nombre de moles de ce IV présentes dans la dispersion colloïdale finale
- $n_2$ représente le nombre de moles $OH^-$ nécessaires pour neutraliser l'acidité apportée par la solution aqueuse de sel de cérium IV
- $n_3$ représente le nombre total de moles $OH^-$ apportées par l'addition de la base

Le taux de neutralisation reflète l'état colloïdal du cérium IV

- avec r = 4, le cérium IV précipite sous forme gélatineuse
- avec r = 0, le cérium IV est sous forme ionique
- avec 0 r 4, le cérium IV est sous forme ionique et/ou colloïdale

Afin d'améliorer le rendement d'obtention du composé de cérium IV de formule (I), on choisit pour des concentrations finales en cérium IV inférieures à 0,5 mole/litre, un taux de neutralisation supérieur ou égal à 0,01 et inférieur ou égal à 2,5. Par contre, pour des concentrations supérieures à 0,5 mole/litre, on le choisit de préférence supérieur ou égal à 0,01 et inférieur ou égal à 2.

D'une manière pratique, pour obtenir un taux de neutralisation désiré r choisi dans l'intervalle précité pour une concentration donnée en Ce IV dans la dispersion colloïdale finale, on ajuste la concentraton de la solution basique de telle sorte qu'elle satisfasse à l'équation suivante:

$$[OH^-] = \frac{(n_1 . r + n_2)\,[Ce\ IV]_f\,[Ce\ IV]_i}{n_1\,([Ce\ IV]_i - [Ce\ IV]_f)}$$

- $[OH^-]$ représente la concentration en moles/litre de la solution basique
- $[Ce\ IV]_f$ représente la concentration en ce IV en moles/litre de la dispersion colloïdale finale
- $[Ce\ IV]_i$ représente la concentration en ce IV en moles/litre de la solution aqueuse de sel de cérium IV
- $n_1$ et $n_2$ sont déterminés par dosage classique de la solution aqueuse du sel de cérium IV:
  - $n_1$ par titrage potentiométrique à l'aide d'une solution d'un sel ferreux
  - $n_2$ par titrage acido-basique après complexation du cérium à l'aide d'ions oxalate

La réaction entre la solution aqueuse de sel de cérium IV et la base mises en oeuvre dans les quantités définies précédemment est effectuée à une température qui peut se situer entre 0°C et 60°C mais de préférence à la température ambiante soit le plus souvent 15 à 25°C.

On peut réaliser le mélange des réactifs précités selon plusieurs variantes. Par exemple, on peut faire le mélange simultané, sous agitation, de la solution aqueuse du sel de cérium IV et de la solution basique ou bien additionner en continu ou en une seule fois, la base dans la solution aqueuse du sel de cérium IV ou inversement.

La durée du mélange dépend des capacités de l'appareillage. Elle peut varier entre 0,1 seconde et 30 heures et est choisie, de préférence, entre 2 heures et 6 heures.

Quel que soit l'ordre d'introduction des réactifs, on obtient une dispersion colloïdale d'un composé de cérium IV en milieu aqueux.

Ladite dispersion ainsi préparée qui est mise en oeuvre dans le procédé de l'invention, présente une concentration en cérium IV qui peut varier entre 0,1 et 2 moles/litre et de préférence, de 0,3 à 0,8 mole/litre. Il est à noter que la borne inférieure ne présente aucun caractère critique mais pour une question de productivité d'appareillage, il est souhaitable que la concentration soit supérieure à 0,3 mole/litre.

Le taux de cérium IV sous forme colloïdale déterminé, par exemple, par analyse chimique des eaux surnageantes obtenues après ultra-centrifugation, est compris entre 20 et 70 % du cérium IV mis en oeuvre.

La taille des colloïdes est définie par la mesure du diamètre hydrodynamique des colloïdes déterminé par diffusion quasi-élastique de la lumière selon la méthode décrite par Michael L. McConnell dans Analytical Chemistry Vol. 53 n° 8 1007 A (1981): ledit diamètre peut varier entre 4 nm (40 Å) et 30 nm (300 Å).

Dans une deuxième étape, la dispersion colloïdale aqueuse du composé de cérium IV est traitée thermiquement à une température comprise entre 80° et 300°C et de préférence entre 90°C et 110°C. D'une manière plus préférentielle, on travaille à la température de reflux du mélange réactionnel car il est plus aisé de contrôler et reproduire cette température. On peut soumettre la dispersion aqueuse du composé de cérium IV immédiatement à la température choisie ou à une montée progressive en température.

Les conditions du traitement thermique ne sont pas critiques: il peut être effectué sous pression atmosphérique ou sous pression telle que par exemple la pression de vapeur d'eau saturante correspondant à la température du traitement thermique. On conduit le traitement soit sous atmosphère d'air ou sous atmosphère de gaz inerte, de préférence l'azote.

Il n'est pas nécessaire d'agiter au cours de ce traitement.

La durée de ce traitement peut varier dans de larges limites entre 2 et 48 heures, de préférence entre 2 heures et 24 heures.

En fin d'opération, on récupère un précipité solide qui est séparé par les techniques classiques de séparation: filtration, décantation, essorage et centrifugation.

On soumet le produit obtenu à un séchage qui peut varier entre 15°C et 120°C et de préférence à température ambiante (15°C à 25°C). Cette opération peut être faite à l'air ou sous pression réduite par exemple entre 1 et 100 mm de mercure (1 333 322 Pa et 133 322 Pa).

On obtient selon l'invention, le composé de cérium IV avec un rendement pondéral, exprimé en $CeO_2$ par rapport a la quantité de $CeO_2$ apportée par la solution de sel de cérium IV, pouvant atteindre 99 %.

Le composé de l'invention obtenu selon le procédé décrit ci-dessus présente la propriété de former aisément une dispersion aqueuse de composé de cérium IV que l'on dénommera par la suite sous le nom de "sol."

Un autre objet de la présente invention réside dans les sols aqueux obtenus à partir du composé de cérium IV répondant à la formule (I).

La présente invention propose également un procédé de préparation d'un sol aqueux de composé de cérium IV, procédé selon lequel on met en suspension dans l'eau, le composé de cérium IV répondant à la formule (I).

Ledit composé peut être dispersé en milieu aqueux ou en milieu légèrement acide de telle sorte que le sol obtenu présente un pH compris entre 1 et 2,5.

Pour ce qui est de l'eau, sa nature n'est pas critique et sa température est généralement la température ambiante.

D'une manière preférentielle, on effectue la préparation dudit sol, sous agitation.

Dans le sol obtenu, le composé de cérium IV se trouve essentiellement sous la forme d'une dispersion colloïdale dans l'eau mais ceci n'exclut pas la présence de Ce IV sous forme ionique, à la place du composé de cérium IV dispersé sous forme colloïdale.

Le taux de cérium IV sous forme colloïdale est généralement supérieur à 95 % et de préférence compris entre 99 et 100 %.

On peut préparer selon l'invention un sol aqueux de composé de cérium IV dont la concentration exprimée en $CeO_2$ Peut atteindre jusqu'à 2 moles par litre.

On peut obtenir un sol dont la taille des colloïdes peut varier dans une gamme assez large. Généralement, le diamètre hydrodynamique des colloïdes déterminé par diffusion quasi-élastique de la lumière peut varier entre 4 nm (40 Å) et 60 nm (600 Å).

On parvient selon l'invention à contrôler la taille des colloïdes présents dans le sol en faisant varier la concentration en cérium et le taux de neutralisation de la dispersion colloïdale. Pour une concentration en cérium donnée et constante, on obtient une taille de colloïdes de plus en plus fine pour un taux de neutralisation de plus en plus élevé.

Les sols obtenus selon l'invention présentent des propriétés de stabilité au cours du stockage: il n'y a pas de décantation aprés plusieurs mois de stockage.

Ils présentent un pH voisin de 1 et restent stables lors d'une basification jusqu'à pH d'environ 2,5.

Dans ce cas, la taille des colloïdes est supérieure: le diamètre hydrodynamique des colloïdes peut varier entre 15 nm (150 Å) et 300 nm (3000 Å).

Enfin, un autre objet de l'invention réside dans de nouveaux sols aqueux de composé de cérium IV dont la caractéristique est la finesse de la taille de ses colloïdes dont le diamètre hydrodynamique varie entre 4 nm (40 Å) et 10 nm (100 Å).

Les sols précités sont préparés selon le procédé de préparation décrit ci-dessus mais en soumettant à un traitement thermique une dispersion colloïdale d'un composé de cérium IV bien caractérisée.

On part d'une dispersion colloïdale d'un composé de cérium IV ayant une concentration en cérium IV variant entre 0,3 et 2 moles/litre et obtenue en faisant réagir une solution aqueuse de sel de cérium IV avec une base de façon à obtenir un taux de neutralisation supérieur ou égal à 1 et inférieur ou égal a 3. Afin d'améliorer le rendement d'obtention du composé de cérium IV de formule (I), la concentration préférée en cérium IV varie entre 0,3 et 0,8 mole/litre et le taux de neutralisation est choisi supérieur ou égal à 1 et inférieur ou égal à 2.

Ladite dispersion ainsi obtenue est un mélange ionscolloïdes dont la taille des colloïdes exprimée par le

diamètre hydrodynamique varie entre 4 nm (40 Å) et 10 nm (100 Å).

Le traitement thermique de la dispersion ainsi que la mise en dispersion du produit obtenu sont effectués conformément au mode opératoire précédemment donné.

On obtient un sol présentant un taux de cérium IV sous forme colloïdale supérieur à 99 % et le diamètre hydrodynamique de ses colloïdes varie entre 4 nm (40 Å) et 10 nm (100 Å).

La distribution des tailles de colloïdes est répartie d'une manière uniforme: la taille des colloïdes étant corrélée avec la mesure du coefficient de diffusion de translation des particules, on met en évidence le caractère uniforme de la distribution par mesure de la variance qui est définie par le rapport

$$\frac{\overline{(D_T - \overline{D_T})^2}}{(\overline{D_T})^2}$$

dans lequel $D_T$ représente le coefficient de diffusion de translation, grandeur expérimentale accessible par la diffusion quasi-élastique de la lumière. On constate que la variance est généralement inférieure à 0,2 et souvent voisine de 0,05.

Par basification jusqu'à obtention d'un pH de 2,5, on peut également obtenir de plus gros colloïdes dont le diamètre hydrodynamique se situe alors entre 15 nm (150 Å) et 50 nm (500 Å).

On donne ci-après des exemples qui illustrent l'invention sans toutefois la limiter.

Dans les exemples, les pourcentages donnés sont exprimés en poids.

**Exemple 1**

**a - Préparation d'un composé de cérium IV répondant à la formule (I)**

Dans un ballon tricol de 6 litres muni d'un thermomètre, d'un dispositif d'agitation, d'un système d'introduction de réactif (pompe doseuse), on introduit à température ambiante 376,5 $cm^3$ d'une solution de nitrate cérique contenant 1,37 mole/litre de cérium IV, 0,02 mole/litre de cérium III et ayant une acidité libre de 0,385 N obtenue par électrolyse conformément à FR-A-2 570 087.

Dans ladite solution maintenue sous agitation, on additionne à température ambiante progressivement 1123 $cm^3$ d'une solution d'ammoniaque 0,8 N à raison de 100 $cm^3$/heure.

On obtient une dispersion colloïdale aqueuse d'un composé de cérium IV à une concentration exprimée en $CeO_2$ égale à 60 g/l et un taux de neutralisation r = 1,5.

Le pourcentage de cérium sous forme colloïdale est d'environ 40 à 60 %: il est déterminé en dosant le cérium IV dans la solution surnageante obtenue aprés ultracentrifugation (140 000 g - 2 heures) par titrage potentiométrique à l'aide d'une solution titrée de fer II.

On caractérise la taille des colloïdes par diffusion quasi-élastique de la lumière selon la méthode décrite par Michael L. McConnell dans Analytical Chemistry, Vol. 53 n° 8 1007 A (1981). Le diamètre moyen hydrodynamique des colloïdes est de l'ordre de 6,4 nm (64 Å).

Dans une deuxième étape, on soumet la dispersion colloïdale aqueuse de composé de cérium IV à un traitement thermique. A cet effet, on met à l'étuve à 100°C, un litre de dispersion aqueuse fraîchement préparée selon le mode opératoire précédemment décrit.

Au bout de 24 heures, on recueille un précipité jaune par filtration sur verre fritté (porosité n°3).

On soumet ensuite le produit obtenu à un séchage à l'air et à température ambiante jusqu'à obtention d'un poids constant.

On recueille 54 g d'un précipité jaune présentant une 30 perte au feu d'environ 22 à 23 %.

L'analyse par diffraction X montre que le produit de l'invention est un produit mal cristallisé qui présente une phase cristalline de type $CeO_2$: c'est une structure type fluorine c'est-à-dire cubique face centrée. On détermine un paramètre de maille de 0,542 nm (5,42 Å) et un taux de cristallisation d'environ 45 %.

Le paramètre de maille de $CeO_2$ pur étant de 0,5411 nm (5,411 Å) (JCPDS 4 0593), on note donc que le paramètre de maille est légèrement dilate.

De plus, lorsque le produit de l'invention est soumis à un traitement thermique par élévation progressive de la température jusqu'à 1000°C, on n'observe qu'une très faible évolution de son taux de cristallisation déterminé par diffraction X, de l'ordre de 10 a 20 % ce qui met en évidence la mauvaise aptitude du produit à cristalliser.

**b - Préparation du sol aqueux du composé de cérium IV**

On additionne 45,3 g du composé préparé selon a- dans de l'eau distillée mise en oeuvre en quantité suffisante pour obtenir un volume de 200 $cm^3$.

On obtient un sol présentant un aspect limpide à l'oeil, ayant une concentration en ce IV exprimée en $CeO_2$ de 172 g/l (1 M) et un pH voisin de 1.

L'examen par diffusion de la lumière montre la présence de colloïdes de diamètre hydrodynamique de l'ordre de 4,7 nm (47 Å) présentant une répartition de tailles uniforme (variance = 0,05).

On remarque que le sol obtenu présente une bonne stabilité au stockage et ne présente pas de décantation pour une durée d'au moins 1 an.

On constate que le sol est stable si l'on accroît le pH. Par addition progressive de la solution d'ammoniaque 0,1 N à raison de 24 $cm^3$/h du sol précédemment synthétisé, il est possible d'obtenir un sol à pH plus élevé jusqu'à un pH de 2,5.

Dans ce cas, le diamètre hydrodynamique des colloïdes déterminé par diffusion quasi-élastique de la lumière est de l'ordre de 15,3 nm (153 Å) (variance = 0,09).

**Exemple 2**

a - On reproduit l'exemple 1 à la différence près que l'on met en oeuvre:

- 1500 $cm^3$ d'une solution d'ammoniaque 2,8 N
- 1920 $cm^3$ d'une solution de nitrate cérique contenant 1,24 mole/litre de cérium IV et ayant une acidité libre de 0,332 N.

On obtient une dispersion colloïdale aqueuse d'un composé de cérium IV à une concentration exprimée en $CeO_2$ égale à 120 g/l et un taux de neutralisation r = 1,5.

On caractérise la taille des colloïdes selon la méthode définie dans l'exemple 1: le diamètre moyen hydrodynamique des colloïdes est égal à 6,9 nm (69 Å).

Dans une deuxième étape, on soumet la dispersion obtenue à un traitement thermique dans une étuve à 100°C pendant 24 heures.

Après séchage à l'air on recueille 344 g d'un produit jaune.

L'analyse chimique du produit obtenu présente la composition chimique suivante:

| | |
|---|---|
| - perte au feu | = 24 % |
| - $CeO_2$ | = 76 % |
| - $H_2O$ | = 7 % |
| - rapport molaire Ce III / Ce III + Ce IV | = 0,04 |
| - rapport molaire $NO_3^-$ / Ce IV | = 0,6 |
| - rapport molaire $NH_4^+$ / Ce IV | = 0,1 |

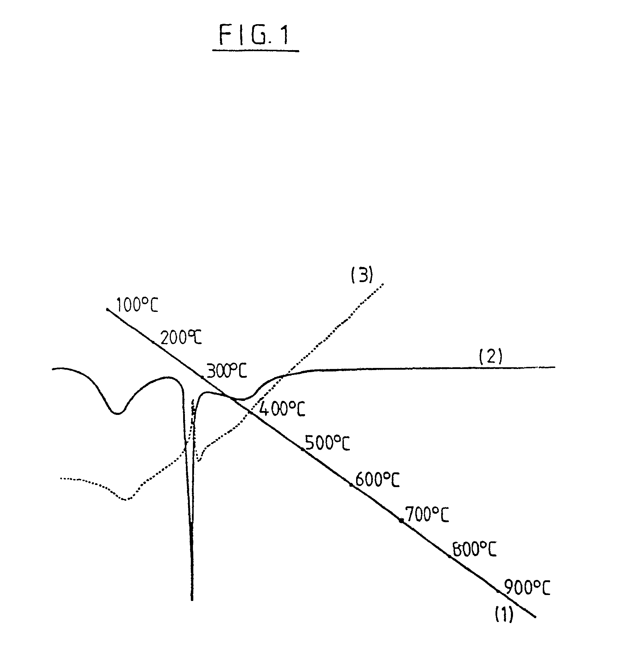

L'analyse thermique différentielle est donnée par la figure 1 qui représente 3 courbes:

- la droite (1) symbolise la montée en température de 100 à 900°C à raison de 300°C par heure
- la courbe (2) indique les températures correspondant à des maxima de perte de poids
- la courbe (3) précise les effets exo- et endothermiques lors de la montée en température

On remarque un pic exothermique vers 250 - 300°C.

b - On prépare le sol comme dans l'exemple 1 par addition de 453 g du composé préparé selon a-, dans de l'eau distillée en quantité suffisante pour obtenir un volume de 200 $cm^3$.

On obtient un sol ayant une concentration en cérium IV exprimée en $CeO_2$ de 172 g/l.

L'examen par diffusion de la lumière met en évidence la présence de colloïdes de diamètre hydrodynamique d'environ 5,9 nm (59 Å) et présentant une répartition homogène des tailles (variance = 0,04).

**Exemple 3**

a - On part des réactifs suivants:

- 6126 $cm^3$ d'une solution d'ammoniaque 0,65 N
- 1400 $cm^3$ d'une solution de nitrate cérique contenant 1,25 mole/litre de cérium IV, 0,02 mole/litre de cérium III et une acidité libre de 0,345 N

On obtient une dispersion colloïdale aqueuse d'un composé de cérium IV à une concentration exprimée en $CeO_2$ égale à 40 g/l et un taux de neutralisation voisin de 2.

Dans une deuxième étape, on soumet ladite dispersion à un traitement thermique à 100°C pendant 8 heures.

On recueille le précipité formé par filtration. Par dosage de cérium dans le filtrat, on définit le rendement de récupération du cérium IV sous la forme d'un composé de cérium IV dispersable qui est évalué à 92 %.

On sèche le produit à température ambiante.

b - Par simple addition d'eau distillée, on prépare un sol contenant 40 g/l de $CeO_2$.

L'examen par diffusion de la lumière du sol ainsi obtenu révèle la présence de colloïdes ayant un diamètre hydrodynamique d'environ 15 nm (150 Å).

**Exemple 4**

a - On reproduit l'exemple 1 à la différence près que l'on met en oeuvre:

- 1000 $cm^3$ d'une solution de nitrate cérique contenant 1,24 mole/litre de cérium IV et ayant une acidité libre de 0,332 N
- 2555 $cm^3$ d'une solution d'ammoniaque 0,3726 N.

L'addition de la solution d'ammoniaque, à température ambiante dans la solution de nitrate cérique est réalisée à 1664 $cm^3$/heure.

On obtient une dispersion colloïdale aqueuse d'un composé de cérium IV à une concentration exprimée en $CeO_2$ égale à 60 g/l et à un taux de neutralisation r = 0,5.

Dans une deuxième étape, on soumet la dispersion obtenue à un traitement thermique, dans un réacteur double enveloppe équipé d'un réfrigérant et d'un système d'agitation, à 100°C pendant 4 heures.

Après filtration du précipité et séchage à l'étuve à 45°C, on recueille 264 g de produit jaune.

L'analyse chimique du produit obtenu montre la composition chimique suivante :

| | |
|---|---|
| - perte au feu | = 21,79 % |
| - $CeO_2$ | = 78,21 % |
| - rapport molaire $NO_3^-$ /$Ce^{IV}$ | = 0,49 |
| - rapport molaire $NH_4^+$ / $Ce^{IV}$ | = 0,025 |

b - On prépare le sol comme dans l'exemple 1 par addition de 44 g du composé préparé selon a- dans de l'eau distillée en quantité suffisante pour obtenir un volume de 200 $cm^3$.

On obtient un sol ayant une concentration en cérium IV exprimée en $CeO_2$ de 172 g/l.

L'examen par diffusion de la lumière met en évidence la présence de colloïdes de diamètre hydrodynamique d'environ 50 nm (500 Å) et présentant une variance de 0,3.

**Exemple 5**

a - On reproduit l'exemple 1 a la différence près que l'on met en oeuvre:

- 1000 $cm^3$ d'une solution de nitrate cérique contenant 1,24 mole/litre de cérium IV et ayant une acidité libre de 0,332 N
- 2555 $cm^3$ d'une solution d'ammoniaque 0,6153 N

L'addition de la solution d'ammoniaque à température amblante dans la solution de nitrate cérique est réalisée en 2 h 32 mn.

On obtient une dispersion colloïdale aqueuse d'un composé de cérium IV à une concentration exprimée en $CeO_2$ égale à 60 g/l et à un taux de neutralisation r = 1,0.

Dans une deuxième étape, on soumet comme dans l'exemple 4 la dispersion obtenue à un traitement thermique à 100°C pendant 4 heures.

Après filtration du précipité et séchage à l'étuve à 45°C, on recueille 208 g de produit jaune.

L'analyse chimique du produit obtenu montre la composition chimique suivante:

| | |
|---|---|
| - perte au feu | = 20,2 % |
| - $CeO_2$ | = 79,8 % |
| - rapport molaire $NO_3^-$ / $Ce^{IV}$ | = 0,466 |
| - rapport molaire $NH_4^+$ / $Ce^{IV}$ | = 0,023 |

b - On prépare le sol comme dans l'exemple 1 par addition de 43,1 g du composé préparé selon a- dans de l'eau distillée en quantité suffisante pour obtenir un volume de 200 $cm^3$.

On obtient un sol ayant une concentration en cérium IV exprimée en $CeO_2$ de 172 g/l.

L'examen par diffusion de la lumière met en évidence la présence de colloïdes de diamètre hydrodynamique d'environ 17,7 nm (177 Å) et présentant une variance de 0,5.

**Exemple 6**

a - On reproduit l'exemple 1 à la différence rés que l'on met en oeuvre:

- 1000 $cm^3$ d'une solution de nitrate cérique contenant 1,24 mole/litre de cérium IV et ayant une acidité libre de 0,332 N
- 4331 $cm^3$ d'une solution d'ammoniaque 0,363 N

L'addition de la solution d'ammoniaque, à température ambiante dans la solution de nitrate cérique est réalisée en 2 h 32 mn.

On obtient une dispersion colloïdale aqueuse d'un composé de cérium IV à une concentration exprimée en $CeO_2$ égale à 40 g/l et à un taux de neutralisation r = 1,0.

Dans une deuxième étape, on soumet comme dans l'exemple 4 la dispersion obtenue à un traitement thermique à 100°C pendant 4 heures.

Après filtration du précipité et séchage à l'étuve à 45°C, on recueille 222 g de produit jaune.

L'analyse chimique du produit obtenu montre la composition chimique suivante:

| | |
|---|---|
| - perte au feu | = 18,37 % |
| - $CeO_2$ | = 81,63 % |
| - rapport molaire $NO_3^-$ / $Ce^{IV}$ | = 0,432 |

b - On prépare le sol comme dans l'exemple 1 par addition de 42,14 g du composé préparé selon a- dans de l'eau distillée en quantité suffisante pour obtenir un volume de 200 $cm^3$.

On obtient un sol ayant une concentration en cérium IV exprimée en $CeO_2$ de 172 g/l.

L'examen par diffusion de la lumière met en évidence la présence de colloïdes de diamètre hydrodynamique d'environ 54,2 nm (542 Å) et présentant une variance de 0,25.

**Revendications**

1. Composé de cérium IV répondant à la formule générale (I):

$$Ce\,(M)_x\,(OH)_y\,(NO_3)_z \qquad (I)$$

dans laquelle
- M représente un métal alcalin ou un radical ammonium quaternaire
- x est compris entre 0,01 et 0,2
- y est tel que $y = 4 - z + x$
- z est compris entre 0,4 et 0,7.

2. Composé de cérium IV selon la revendication 1 caractérisé par le fait qu'il présente par analyse thermique différentielle, un pic exothermique de 250°C à 300°C pour une montée en température de 300°C par heure.

3. Composé de cérium IV selon la revendication 1 caractérisé par le fait qu'il présente une phase cristalline type $CeO_2$ ayant un paramètre de maille de 0,542 nm (5,42 Å) à 0,544 nm (5,44 Å) et un taux de cristallisation variant de 30 à 70 %.

4. Composé selon la revendication 3 caractérisé par le fait que le taux de cristallisation est de 40 à 60 %.

5. Procédé de préparation du composé de cérium IV décrit dans l'une des revendications 1 à 4 caractérisé par le fait qu'il consiste à préparer une dispersion colloïdale d'un composé de cérium IV en milieu aqueux en faisant réagir une solution aqueuse de nitrate cérique ou une solution aqueuse de nitrate céri-ammoniacal avec une base choisie parmi les hydroxydes d'alcalin ou l'ammoniac de façon à obtenir un taux de neutralisation supérieur ou égal à 0,01 et inférieur ou égal à 3, à soumettre ladite dispersion à un traitement thermique entre 80° et 300°C et à séparer le précipité formé.

6. Procédé selon la revendication 5 caractérisé par le fait que la solution aqueuse de nitrate cérique est obtenue par oxydation électrochimique d'une solution aqueuse de nitrate céreux.

7. Procédé selon l'une des revendications 5 et 6 caractérisé par le fait que la concentration en sel de cérium IV exprimée en cérium IV varie entre 0,1 et 2 moles/litre.

8. Procédé selon la revendication 7 caractérisé par le fait que la concentration en sel de cérium IV exprimée en cérium

IV est comprise entre 1 et 2 moles/litre.

9. Procédé selon l'une des revendications 5 à 8 caractérisé par le fait que la solution basique est une solution aqueuse d'ammoniaque, de soude ou de potasse ou de l'ammoniac gazeux.

10. Procédé selon la revendication 9 caractérisé par le fait que la normalité de la solution basique est comprise entre 0,1 à 11 N.

11. Procédé selon la revendication 10 caractérisé par le fait que la normalité de la solution basique est comprise entre 0,1 et 5 N.

12. Procédé selon la revendication 5 caractérisé par le fait que l'on fait réagir une solution aqueuse de sel de cérium IV avec une base de façon à obtenir un taux de neutralisation supérieur ou égal à 0,01 et inférieur ou égal à 3.

13. Procédé selon la revendication 12 caractérisé par le fait que l'on choisit un taux de neutralisation supérieur ou égal à 0,01 et inférieur ou égal à 2,5 pour des concentrations finales en cérium IV inférieures à 0,5 mole/litre et un taux de neutralisation supérieur ou égal à 0,01 et inférieur ou égal à 2 pour des concentrations finales en cérium IV supérieures à 0,5 mole/litre.

14. Procédé selon la revendication 5 caractérisé par le fait que la température de réaction entre la solution aqueuse de sel de cérium IV et la base se situe entre 0°C et 60°C. 15. Procédé selon la revendication 14 caractérisé par le fait que la température de réaction choisie est comprise entre 15°C et 25°C.

16. Procédé selon la revendication 5 caractérisé par le fait que l'on mélange simultanément sous agitation la solution aqueuse de sel de cérium IV et la solution basique ou que l'on additionne la solution basique dans la solution de cérium IV ou inversement.

17. Dispersion colloïdale d'un composé de cérium IV obtenue selon le procédé de préparation décrit dans l'une des revendications 5 à 16.

18. Dispersion selon la revendication 17 caractérisée par le fait que la concentration en cérium IV est comprise entre 0,1 et 2 moles/litres.

19. Dispersion selon la revendication 18 caractérisée par le fait que la concentration en cérium IV est comprise entre 0,3 et 0,8 mole/litre.

20. Dispersion selon l'une des revendications 17 à 19 caractérisée par le fait qu'elle présente un taux de cérium sous forme 10 colloïldale variant entre 20 et 70 %.

21. Dispersion selon l'une des revendications 17 à 20 caractérisée par le fait que le diamètre hydrodynamique des colloïdes varie entre 4 nm (40 Å) et 30 nm (300 Å).

22. Procédé selon l'une des revendications 5 à 16 caractérisé par le fait que l'on traite thermiquement la dispersion colloïdale aqueuse décrite dans l'une des revendications 17 à 21 à une température comprise entre 80°C et 300°C.

23. Procédé selon la revendication 22 caractérisé par le fait que la température du traitement thermique est comprise entre 90°C 20 et 110°C.

24. Procedé selon l'une des revendications 22 et 23 caractérisé par le fait que la durée du traitement thermique varie entre 2 heures et 48 heures.

25. Procédé selon la revendication 24 caractérisé par le fait que la durée dudit traitement est comprise entre 2 heures et 24 heures.

26. Procédé selon l'une des revendications 5 à 16 et 22 à 25 caractérise par le fait que l'on récupère un précipité solide séparé par les techniques classiques de séparation puis soumis à une opération de séchage.

27. Procédé selon la revendication 26 caractérisé par le fait que la température de séchage est comprise entre 15°C et 120°C.

28. Procédé selon la revendication 27 caractérisé par le fait que la température de séchage est comprise entre 15°C et 25°C.

29. Composé de cérium IV dispersable dans l'eau caractérisé par le fait qu'il est obtenu par un procédé selon l'une des revendications 5 à 16 et 22 à 28.

30. Sol aqueux obtenu par mise en dispersion dans l'eau d'un composé de cérium IV décrit dans l'une des revendications 1 à 4.

31. Sol aqueux selon la revendication 30 caractérisé par le fait que la concentration du composé de cérium IV exprimée en $CeO_2$ peut atteindre 2 moles/litre.

32. Sol aqueux selon l'une des revendications 30 et 31 caractérisé par le fait qu'il présente un taux de cérium sous forme colloïdale supérieur à 95 %.

33. Sol aqueux selon l'une des revendications 30 à 32 caractérisé par le fait que le diamètre hydrodynamique des colloïdes varie entre 4 nm (40 Å) et 60 nm (600 Å).

34. Sol aqueux obtenu par basification jusqu'à un pH d'environ 2,5 du sol décrit dans l'une des revendications 30 à 33 caractérisé par le fait que le diamètre hydrodynamique des colloïdes varie entre 15 nm (150 Å) et 300 nm (3000 Å).

35. Sol aqueux selon la revendication 33 caractérisé par le fait que le diamètre hydrodynamique des colloïdes varie entre 4 nm (40 Å) et 10 nm (100 Å).

36. Sol selon la revendication 35 caractérisé par le fait que la distribution des tailles de ses colloïdes est uniforme.

37. Sol selon l'une des revendications 35 et 36 caractérisé par le fait qu'il présente un taux de cérium IV sous forme colloïdale supérieur à 99 %.

38. Procédé de préparation du sol décrit dans l'une des revendications 35 à 37 caractérisé par le fait qu'il est obtenu en mettant en dispersion dans l'eau un composé de cérium IV selon la revendication 1 et obtenu selon le procédé décrit dans l'une des revendications 5 à 16 et 22 à 28 mais en choisissant un taux de neutralisation supérieur ou égal à 1 et inférieur ou égal à 3 et une concentration finale en cérium IV variant entre 0,3 et 2 moles/litre.

39. Procédé selon la revendication 38 caractérisé par le fait que l'on choisit un taux de neutralisation supérieur ou égal à 1 et inférieur ou égal à 2 et une concentration finale en cérium IV variant entre 0,3 et 0,8 mole/litre.

40. Procédé selon l'une des revendications 38 et 39 caractérisé par le fait que la dispersion colloïdale du compose de cérium IV qui est ensuite soumise au traitement thermique, présente des colloïdes ayant un diamètre hydrodynamique variant de 4 nm (40 Å) a 10 nm (100 Å).

41. Sol aqueux obtenu par basification jusqu'à un pH d'environ 2,5 du sol décrit dans l'une des revendications 35 à 37 caractérisé par le fait que le diamètre hydrodynamique des colloïdes varie entre 15 nm (150 Å) et 50 nm (500 Å).

42. Procédé de préparation d'un sol décrit dans l'une des revendications 30 à 33 et 35 à 37 à taille de colloïdes contrôlée caractérisé par le fait qu'il consiste à augmenter ou à diminuer le taux de neutralisation à concentration en cérium constante pour obtenir, selon le cas, une taille de colloïdes respectivement plus fine ou plus grosse.

**Patentansprüche**

1. Cer-IV-Verbindung entsprechend der allgemeinen Formel (I)

$$Ce\,(M)_x\,(OH)_y\,(NO_3)_z \qquad (I)$$

in der
- M ein Alkalimetall oder einen quaternären Ammoniumrest bedeutet,
- x zwischen 0,01 und 0,2 liegt,
- y so gewählt ist, daß y = 4 - z + x ist,
- z zwischen 0,4 und 0,7 liegt.

2. Cer-IV-Verbindung nach Anspruch 1 gekennzeichnet durch die Tatsache, daß sie bei thermischer Differentialanalyse einen exothermen Peak bei 250 bis 300°C bei einem Temperaturanstieg von 300°C pro Stunde aufweist.

3. Cer-IV-Verbindung nach Anspruch 1 gekennzeichnet durch die Tatsache, daß sie eine kristalline Phase vom $CeO_2$-Typ darstellt mit einer Gitterkonstanten von 0,542 nm (5,42 Å) bis 0,544 nm (5,44 Å) und einem Kristallisationsgrad variierend von 30 bis 70 %.

4. Verbindung nach Anspruch 3, gekennzeichnet durch die Tatsache, daß der Kristallisationsgrad 40 bis 60 % beträgt.

5. Verfahren zur Herstellung der (r-IV-Verbindung nach einem der Ansprüche 1 bis 4, gekennzeichnet durch die Tatsache, daß es darin besteht, eine Kolloidale Dispersion einer Cer-IV-Verbindung in einem wäßrigen Medium herzustellen durch Umsetzen einer wäßrigen Cer-IV-nitratlösung oder einer wäßrigen Cerammoniaknitratlösung mit einer Base, ausgewählt aus den Alkalihydroxiden und Ammoniak derart, daß man einen Neutralisationsgrad über oder gleich 0,01 und unter oder gleich 3 erhält, diese Dispersion einer thermischen Behandlung zwischen 80°C und 300°C zu unterwerfen und den entstandenen Niederschlag abzutrennen.

6. Verfahren nach Anspruch 5, gekennzeichnet durch die Tatsache, daß die wäßrige Cer-IV-Nitratlösung erhalten wird durch elektrochemische Oxidation einer wäßrigen Cer-III-Nitratlösung.

7. Verfahren nach einem der Ansprüche 5 und 6, gekennzeichnet durch die Tatsache, daß die Konzentration an Cer-IV-Salz, ausgedrückt als Cer-IV, zwischen 0,1 und 2 mol/l variiert.

8. Verfahren nach Anspruch 7, gekennzeichnet durch die Tatsache, daß die Konzentration an Cer-IV-Salz, ausgedrückt als Cer-IV, zwischen 1 und 2 mol/l liegt.

9. Verfahren nach einem der Ansprüche 5 bis 8, gekennzeichnet durch die Tatsache, daß die basische Lösung eine wäßrige Lösung von Ammoniak, Natron- oder Kalilauge oder gasförmigem Ammoniak ist.

10. Verfahren nach Anspruch 9, gekennzeichnet durch die Tatsache, daß die Normalität der basischen Lösung zwischen 0,1 und 11 N liegt.

11. Verfahren nach Anspruch 10, gekennzeichnet durch die Tatsache, daß die Normalität der basischen Lösung zwischen 0,1 und 5 N liegt.

12. Verfahren nach Anspruch 5, gekennzeichnet durch die Tatsache, daß man eine wäßrige Lösung von Cer-IV-Salz umsetzt mit einer Base derart, daß man einen Neutralisationsgrad über oder gleich 0,01 und unter oder gleich 3 erhält.

13. Verfahren nach Anspruch 12, gekennzeichnet durch die Tatsache, daß man einen Neutralisationsgrad über oder gleich 0,01 und unter oder gleich 2,5 auswählt für Endkonzentrationen an Cer-IV unter 0,5 mol/l und einen Neutralisationsgrad über oder gleich 0,01 und unter oder gleich 2 für Endkonzentrationen an Cer-IV über 0,5 mol/l.

14. Verfahren nach Anspruch 5, gekennzeichnet durch die Tatsache, daß die Reaktionstemperatur zwischen der wäßrigen Cer-IV-Salzlösung und der Base zwischen O°C und 60°C liegt.

15. Verfahren nach Anspruch 14, gekennzeichnet durch die Tatsache, daß die gewählte Reaktionstemperatur zwischen 15°C und 25°C liegt.

16. Verfahren nach Anspruch 5, gekennzeichnet durch die Tatsache, daß man gleichzeitig unter Rühren die wäßrige Lösung des Cer-IV-Salzes und die basische Lösung mischt oder daß man die basische Lösung zu einer Cer-IV-Lösung zugibt oder umgekehrt.

17. Kolloidale Dispersion einer Cer-IV-Verbindung, die erhalten worden ist nach dem Herstellungsverfahren, wie es in einem der Ansprüche 5 bis 16 beschrieben ist.

18. Dispersion nach Anspruch 17, gekennzeichnet durch die Tatsache, daß die Konzentration an Cer-IV zwischen 0,1 und 2 mol/l liegt.

19. Dispersion nach Anspruch 18, gekennzeichnet durch die Tatsache, daß die Konzentration an Cer-IV zwischen 0,3 und 0,8 mol/l liegt.

20. Dispersion nach einem der Ansprüche 17 bis 19, gekennzeichnet durch die Tatsache, daß sie einen Gehalt an Cer in kolloidaler Form, variierend zwischen 20 und 70 %, aufweist.

21. Dispersion nach einem der Ansprüche 17 bis 20, gekennzeichnet durch die Tatsache, daß der hydrodynamische Durchmesser der Kolloide zwischen 4 nm (40 Å) und 30 nm (300 Å) variiert.

22. Verfahren nach einem der Ansprüche 5 bis 16, gekennzeichnet durch die Tatsache, daß man die kolloidale wäßrige Dispersion, die in einem der Ansprüche 17 bis 21 beschrieben ist, thermisch bei einer Temperatur zwischen 80°C und 300°C behandelt.

23. Verfahren nach Anspruch 22, gekennzeichnet durch die Tatsache, daß die Temperatur der thermischen Behandlung zwischen 90°C und 110°C liegt.

24. Verfahren nach einem der Ansprüche 22 und 23, gekennzeichnet durch die Tatsache, daß die Dauer der thermischen Behandlung zwischen 2 h und 48 h variiert.

25. Verfahren nach Anspruch 24, gekennzeichnet durch die Tatsache, daß die Dauer der erwähnten Behandlung zwischen 2 h und 24 h liegt.

26. Verfahren nach einem der Ansprüche 5 bis 16 und 22 bis 25, gekennzeichnet durch die Tatsache, daß man einen festen abgetrennten Niederschlag nach klassischen Verfahren der Abtrennung gewinnt und abschließend einer Trocknungsoperation unterwirft.

27. Verfahren nach Anspruch 26, gekennzeichnet durch die Tatsache, daß die Trocknungstemperatur zwischen 15°C und 120°C liegt.

28. Verfahren nach Anspruch 27, gekennzeichnet durch die Tatsache, daß die Trocknungstemperatur zwischen 15°C und 25°C liegt.

29. Cer-IV-Verbindung, die in Wasser dispergierbar ist, gekennzeichnet durch die Tatsache, daß sie erhalten worden ist durch ein Verfahren nach einem der Ansprüche 5 bis 16 und 22 bis 28.

30. Wäßriges Sol, dadurch erhalten, daß man eine Cer-IV-Verbindung, wie sie in einem der Ansprüche 1 bis 4 beschrieben ist, in Wasser in Dispersion bringt.

31. Wäßriges Sol nach Anspruch 30, gekennzeichnet durch die Tatsache, daß die Konzentration der Cer-IV-Verbindung, ausgedrückt als $CeO_2$, 2 mol/l erreichen kann.

32. Wäßriges Sol nach einem der Ansprüche 30 und 31, gekennzeichnet durch die Tatsache, daß es einen Gehalt an Cer in kolloidaler Form über 95 % aufweist.

33. Wäßriges Sol nach einem der Ansprüche 30 bis 32, gekennzeichnet durch die Tatsache, daß der hydrodynamische Durchmesser der Kolloide zwischen 4 nm (40 Å) und 60 nm (600 Å) variiert.

34. Wäßriges Sol, erhalten durch Basischmachen bis zu einem pH-Wert von etwa 2,5 des in einem der Ansprüche 30 bis 33 beschriebenen Sols, gekennzeichnet durch die Tatsache, daß der hydrodynamische Durchmesser der Kolloide zwischen 15 nm (150 Å) und 300 nm (3000 Å) variiert.

35. Wäßriges Sol nach Anspruch 33, gekennzeichnet durch die Tatsache, daß der hydrodynamische Durchmesser der Kolloide zwischen 4 nm (40 Å) und 10 nm (100 Å) variiert.

36. Sol nach Anspruch 35, gekennzeichnet durch die Tatsache, daß die Größenverteilung der Kolloide gleichmäßig ist.

37. Sol nach einem der Ansprüche 35 und 36, gekennzeichnet durch die Tatsache, daß es einen Gehalt an Cer-IV in kolloidaler Form über 99 % aufweist.

38. Verfahren zur Herstellung des in einem der Ansprüche 35 bis 37 beschriebenen Sols, gekennzeichnet durch die Tatsache, daß es dadurch erhalten wird, daß eine Verbindung von Cer-IV nach Anspruch 1 und erhalten nach dem Verfahren, wie es in einem der Ansprüche 5 bis 16 und 22 bis 28 beschrieben ist, in Wasser in Dispersion gebracht wird, wobei jedoch ein Neutralisationsgrad über oder gleich 1 und unter oder gleich 3 und eine Endkonzentration an Cer-IV, variierend zwischen 0,3 und 2 mol/l, gewählt wird.

39. Verfahren nach Anspruch 38, gekennzeichnet durch die Tatsache, daß man einen Neutralisationsgrad über oder gleich 1, und unter oder gleich 2 und eine Endkonzentration an Cer-IV, variierend zwischen 0,3 und 0,8 mol/l wählt.

40. Verfahren nach einem der Ansprüche 38 und 39, gekennzeichnet durch die Tatsache, daß die kolloidale Dispersion der Cer-IV-Verbindung, die anschließend einer thermischen Behandlung unterworfen wird, Kolloide mit einem hydrodynamischen Durchmesser, variierend von 4 nm (40 Å) bis 10 nm (100 Å), aufweist.

41. Wäßriges Sol, erhalten durch Basischmachen bis zu einem pH-Wert von etwa 2,5 des in einem der Ansprüche 35 bis 37 beschriebenen Sols, gekennzeichnet durch die Tatsache, daß der thermodynamische Durchmesser der Kolloide zwischen 15 nm (150 Å) und 50 nm (500 Å) variiert.

42. Verfahren zur Herstellung eines in einem der Ansprüche 30 bis 33 und 35 bis 37 beschriebenen Sols mit einer geregelten Größe der Kolloide, gekennzeichnet durch die Tatsache, daß es darin besteht, daß man den Neutralisationsgrad erhöht oder verringert, bis zu einer konstanten Cerkonzentration, um je nachdem eine geringere oder größere Größe der Kolloide zu erhalten.

## Claims

1. A compound of cerium IV corresponding to the following general formula (I):

$$Ce\ (M)_x\ (OH)_y\ (NO_3)_z \qquad (I)$$

wherein:
- M represents an alkali metal or a quaternary ammonium radical,
- x is between 0.01 and 0.2,
- y is such that $y = 4 - z + x$ and
- z is between 0.4 and 0.7.

2. A cerium IV compound according to claim 1 characterised in that by differential thermal analysis it has an exothermic peak of 250°C to 300°C for a rise in temperature of 300°C per hour.

3. A cerium IV compound according to claim 1 characterised in that it has a crystalline phase of $CeO_2$ type having a mesh parameter of 0.542 nm (5.42 Å) to 0.544 nm (5.44 Å) and a degree of crystallisation which varies from 30 to 70 %.

4. A compound according to claim 3 characterised in that the degree of crystallisation is from 40 to 60 %.

5. A process for preparation of the cerium IV compound described in one of claims 1 to 4 characterised in that it comprises preparing a colloidal dispersion of a compound of cerium IV in an aqueous medium by reacting an aqueous solution of ceric nitrate or an aqueous solution of ceri-ammoniacal nitrate with a base selected from alkali metal hydroxides or ammonia in such a way as to obtain a degree of neutralisation of greater than or equal to 0.01 and less than or equal to 3, subjecting said dispersion to a heat treatment at between 80° and 300°C and separating the precipitate formed.

6. A process according to claim 5 characterised in that the aqueous solution of ceric nitrate is obtained by electrochemical oxidation of an aqueous solution of cerous nitrate.

7. A process according to one of claims 5 and 6 characterised in that the level of concentration of salt of cerium IV expressed in terms of cerium IV varies between 0.1 and 2 moles per litre.

8. A process according to claim 7 characterised in that the level of concentration of salt of cerium IV expressed in terms of cerium IV is between 1 and 2 moles per litre.

9. A process according to one of claims 5 to 8 characterised in that the basic solution is an aqueous solution of ammonia, sodium hydroxide or potassium hydroxide or gaseous ammonia.

10. A process according to claim 9 characterised in that the normality of the basic solution is between 0.1 to 11 N.

11. A process according to claim 10 characterised in that the normality of the basic solution is between 0.1 and 5 N.

12. A process according to claim 5 characterised by reacting an aqueous solution of salt of cerium IV with a base so as to obtain a degree of neutralisation which is greater than or equal to 0.01 and lower than or equal to 3.

13. A process according to claim 12 characterised by choosing a degree of neutralisation which is higher than or equal to 0.01 and lower than or equal to 2.5 for final levels of concentration in respect of cerium IV which are lower than 0.5 mole per litre, and a degree of neutralisation which is higher than or equal to 0.01 and lower than or equal to 2 for final levels of concentration in respect of cerium IV which are higher than 0.5 mole per litre.

14. A process according to claim 5 characterised in that the temperature of the reaction between the aqueous solution of cerium IV salt and the base is between 0°C and 60°C.

15. A process according to claim 14 characterised in that the reaction temperature selected is between 15°C and 25°C.

16. A process according to claim 5 characterised by simultaneously ding with agitation the aqueous solution of cerium IV salt and the basic solution or by adding the basic solution to the solution of cerium IV or vice-versa.

17. A colloidal dispersion of a compound of cerium IV which is obtained in accordance with the preparation process set forth in one of claims 5 to 16.

18. A dispersion according to claim 17 characterised in that the level of concentration of cerium IV is between 0.1 and 2 moles per litre.

19. A dispersion according to claim 18 characterised in that the level of concentration of cerium IV is between 0.3 and 0.8 mole per litre.

20. A dispersion according to one of claims 17 to 19 characterised in that it has a proportion of cerium in colloidal form which varies between 20 and 70%.

21. A dispersion according to one of claims 17 to 21 characterised in that the hydrodynamic diameter of the colloids varies between 4 nm (40 Å) and 30 nm (300 Å)

22. A process according to one of claims 5 to 16 characterised by subjecting the aqueous colloidal dispersion set forth in one of claims 17 to 21 to heat treatment at a temperature of between 80°C and 300°C.

23. A process according to claim 22 characterised in that the temperature of the heat treatment is between 90°C and 110°C.

24. A process according to one of claims 22 and 23 characterised in that the duration of the treatment varies between 2 hours and 48 hours.

25. A process according to claim 24 characterised in that the duration of said treatment is between 2 hours and 24 hours.

26. A process according to one of claims 5 to 16 and 22 to 25 characterised by recovering a solid precipitate which is separated by conventional separation procedures and then subjected to a drying operation.

27. A process according to claim 26 characterised in that the drying temperature is between 15°C and 120°C.

28. A process according to claim 27 characterised in that the drying temperature is between 15°C and 25°C.

29. A compound cerium IV which is dispersible in water, characterised in that it is obtained by a process according to one of claims 5 to 16 and 22 to 28.

30. An aqueous sol which is obtained by putting into dispersion in water a compound of cerium IV as set forth in one of claims 1 to 4.

31. An aqueous sol according to claim 30 characterised in that the level of concentration of the cerium IV compound expressed in terms of $CeO_2$ can attain 2 moles per litre.

32. An aqueous sol according to one of claims 30 and 31 characterised in that it has a proportion of cerium in colloidal form which is greater than 95%.

33. An aqueous sol according to one of claims 30 to 32 characterised in that the hydrodynamic diameter of the colloids varies between 4 nm (40 Å) and 60 nm (600 Å).

34. An aqueous sol obtained by basification to a pH-value of approximately 2,5 of the sol as set forth in one of claims 30 to 33 characterised in that the hydrodynamic diameter of the colloids varies between 15 nm (150 Å and 300 nm (3000 Å).

35. An aqueous sol according to claim 33 characterised in that the hydrodynamic diameter of the colloids varies between 4 nm (40 Å) and 10 nm (100 Å).

36. A sol according to claim 35 characterised in that the distribution of the sizes of its colloids is uniform.

37. A sol according to claims 35 and 36 characterised in that it has a proportion of cerium IV in colloidal form of greater than 99 %.

38. A process for preparation of the sol described in one of claims 35 to 37 characterised in that it is obtained by putting into dispersion in water a compound of cerium IV according to claim 1 and obtained by the process set forth in one of claims 5 to 16 and 22 to 28 but using a degree of neutralisation which is greater than or equal to 1 and lower than or equal to 3 and a final level of concentration of cerium IV which varies between 0,3 and 2 moles per litre.

39. A process according to claim 38 characterised by choosing a degree of neutralisation which is greater than or equal to 1 and lower than or equal to 2 and a final level of concentration of cerium IV which varies between 0,3 and 0,8 mole per litre.

40. A process according to one of claims 38 and 39 characterised in that the colloidal dispersion of the compound of

cerium IV which is then subjected to the heat treatment has colloids of a hydrodynamic diameter that varies from 4 nm (40 Å) to 10 nm (100 Å).

41. An aqueous sol obtained by basification to a pH-value of approximately 2,5 of the sol as set forth in one of claims 35 to 37 characterised in that the hydrodynamic diameter of the colloids varies between 15 nm (150 Å) and 50 nm (500 Å).

42. A process for the preparation of a sol as set forth in one of claims 30 to 33 and 35 to 37 with a controlled size of colloids characterised in that it comprises increasing or reducing the degree of neutralisation with a constant level of concentration of cerium to obtain a finer or coarser size of colloids respectively, depending on the circumstances.

FIG. 1